# FASCICULE DE BREVET EUROPEEN

(11) **EP 2 268 471 B1**
(45) Date de publication et mention de la délivrance du brevet: **06.01.2016**
(21) Numéro de dépôt: 09727304.9
(22) Date de dépôt: 11.03.2009
(51) Int. Cl.: B29C 33/50

(54) **PROCEDE DE REALISATION D'UN RAIDISSEUR SUR UNE SURFACE D'UN ELEMENT A RIGIDIFIER**
VERFAHREN ZUR HERSTELLUNG EINES VERSTEIFUNGSMITTELS AUF DER OBERFLÄCHE EINES ZU VERSTEIFENDEN ELEMENTS
METHOD FOR PRODUCING A STIFFENER ON A SURFACE OF AN ELEMENT TO BE STIFFENED

(30) Priorité: 14.03.2008 FR 0851681
(43) Date de publication de la demande: 05.01.2011
(73) Titulaire: Airbus Opérations SAS, 31060 Toulouse (FR)
(72) Inventeur: GUILLE, Florent, 44200 Nantes (FR); LEROUX, Gregory, 44300 Nantes (FR); BRETECHER, Claude, 44340 Bouguenais (FR)
(74) Mandataire: Fantin, Laurent
(86) Numéro de dépôt international: PCT/FR2009/050402
(87) Numéro de publication internationale: WO 2009/122058

(56) Documents cités:
- WO-A-2005/105402
- WO-A-2008/003721
- FR-A- 2 898 539
- GB-A- 1 522 432
- US-A1- 2008 029 644

## Description

La présente invention se rapporte à un procédé de réalisation d'un raidisseur évidé en forme de oméga ainsi qu'à un noyau pour la mise en oeuvre du procédé. Dans le domaine aéronautique, on a recourt à des raidisseurs afin d'augmenter les caractéristiques mécaniques de certains éléments tels que par exemple les panneaux formant le fuselage.

Lorsque l'élément à rigidifier et le raidisseur sont métalliques, ils sont assemblés après avoir été mis en forme, par exemple par rivetage ou collage.

Afin de réduire la masse embarquée, les éléments métalliques tendent à être remplacés par des éléments en matériau composite.

Selon une technique d'assemblage d'éléments en matériau composite, un noyau est intercalé entre l'élément à rigidifier et le raidisseur qui ne sont pas polymérisés au moment de la mise en place du noyau mais lors du même cycle.

Ce noyau est nécessaire pour maintenir les éléments non encore rigides dans la position souhaitée jusqu'à la polymérisation.

Selon une première technique décrite dans le document FR-2.576.546, le noyau est réalisé à partir d'un agglomérat de sable et d'un liant constitué d'une résine formophénolique polymérisée avec un durcisseur tel qu'un diisocyanate, en présence d'un catalyseur tel qu'une amine, de préférence liquide. Après la réalisation de la pièce autour du noyau, ce dernier est désagrégé au moyen d'un solvant organique.

Cette solution n'est pas pleinement satisfaisante car le noyau n'est pas réutilisable et doit être détruit à chaque pièce réalisée. Par ailleurs, sa destruction génère des déchets difficilement recyclables ou valorisables.

Les documents US-5.387.098 et US-5.547.629 décrivent des noyaux réutilisables.

Le document US-5.387.098 décrit un noyau souple de section constante susceptible de s'adapter à une nervure ayant un profil courbe. Il comprend un fourreau en matériau souple, notamment en silicone, dans lequel sont superposées des lames de matériau souple. Selon les cas, les lames peuvent être toutes dans le même matériau ou avoir des matériaux différents pour obtenir le coefficient de dilatation souhaité.

Selon ce document, toutes les lames sont reliées les unes aux autres grâce à des pions qui empêchent tout mouvement relatif entre les lames selon une direction longitudinale.

Le document US-5.547.629 décrit l'usage d'un noyau réutilisable pour réaliser un profil d'hélice d'hélicoptère. Selon ce document, chaque cavité comprend un seul noyau en caoutchouc.

Dans les deux cas, après polymérisation, les noyaux sont retirés en tirant sur l'une de leurs extrémités.

La traction du noyau provoque une contraction de sa section qui facilite son retrait de la cavité.

Même s'ils sont réutilisables, ces noyaux ne donnent pas pleinement satisfaction car pour faciliter son retrait le noyau doit être réalisé en un matériau avec un coefficient d'allongement relativement important. Or ce type de matériau tend à avoir un coefficient de dilatation ne permettant pas d'obtenir les précisions dimensionnelles requises. A contrario, si on choisit un matériau pour le noyau qui permet d'obtenir les précisions dimensionnelles requises, le noyau peut difficilement se retirer de la cavité du raidisseur en raison d'un faible coefficient d'allongement.

Par ailleurs, ce type de noyau ne peut pas être utilisé lorsque la section de la cavité varie, notamment lorsque le panneau sur lequel est rapporté le raidisseur n'est pas plan en raison par exemple de lâchés de plis.

Le document WO2008/003721 décrit un noyau avec une forme en spirale qui recouvert d'une couche facilitant son extraction d'une cavité. Pour pouvoir être déformé, ce noyau doit être réalisé en un matériau déformable qui ne garantit pas la précision dimensionnelle.

Aussi, la présente invention vise à pallier aux inconvénients de l'art antérieur en proposant un procédé de mise en place d'un raidisseur délimitant une cavité grâce à un noyau extractible, permettant de garantir les précisions dimensionnelles requises.

A cet effet, l'invention a pour objet un procédé de réalisation d'un raidisseur sur une surface d'un élément à rigidifier, au moins l'un des deux étant en un matériau composite non complètement polymérisé, ledit raidisseur comprenant selon une direction transversale deux zones de contact avec la surface entre lesquelles le raidisseur et l'élément à rigidifier forment une cavité débouchante à au moins une des extrémités dudit raidisseur, consistant à utiliser un noyau en plusieurs parties, placé dans la cavité et retiré de ladite cavité après polymérisation, caractérisé en ce qu'il consiste à utiliser un noyau avec une première partie ayant un coefficient de dilatation inférieur à celui du matériau du raidisseur pour assurer la précision géométrique requise et au moins une deuxième partie ayant un coefficient d'allongement supérieur ou égal à 600% pour permettre l'extraction de ladite partie par traction à une des extrémités de ladite seconde partie de manière à provoquer une contraction de sa section.

D'autres caractéristiques et avantages ressortiront de la description qui va suivre de l'invention, description donnée à titre d'exemple uniquement, en regard des dessins annexés sur lesquels :
- la figure 1A est une coupe longitudinale illustrant un noyau selon l'invention lors de la polymérisation d'un raidisseur rapporté sur un panneau,
- la figure 1B est une coupe longitudinale illustrant le retrait d'une seconde partie par traction et contraction de ladite seconde partie,
- la figure 1C est une coupe longitudinale illustrant le retrait d'une première partie du noyau,
- la figure 1D est une coupe longitudinale d'un panneau sur lequel est rapporté un raidisseur après polymérisation.
- La figure 2 est une coupe transversale illustrant un noyau selon l'invention lors de la polymérisation d'un raidisseur rapporté sur un panneau, et
- Les figures 3A et 3B sont-des coupes transversales d'une première partie d'un noyau selon l'invention illustrant les étapes de sa réalisation.

Sur les figures, on a représenté en 10 un élément à rigidifier, appelé par la suite panneau, susceptible de former une partie du fuselage d'un aéronef par exemple, et en 12 un raidisseur rapporté sur l'une des surfaces 14 dudit panneau 10. Au moins l'un des deux éléments 10, 12 est réalisé en matériau composite.

La direction longitudinale correspond pour la suite de la description à la direction de la dimension la plus importante du raidisseur parallèle au panneau, la direction transversale étant la direction perpendiculaire à la direction longitudinale et parallèle au panneau.

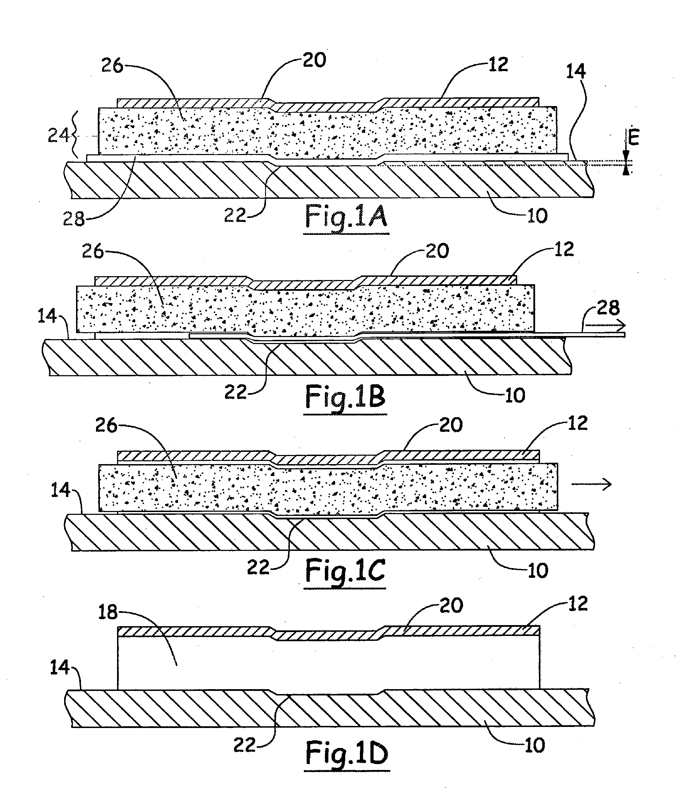

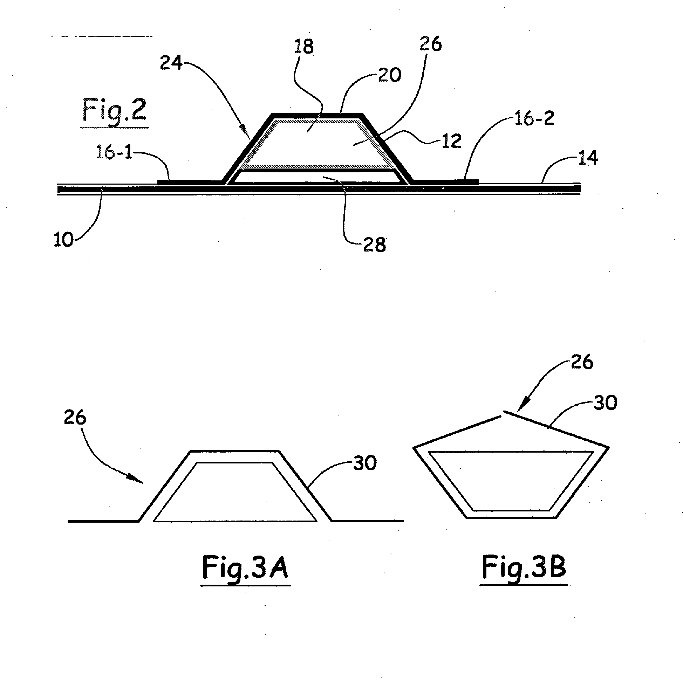

Le raidisseur 12 comprend selon une direction transversale deux zones de contact 16.1 et 16.2 avec la surface 14 entre lesquelles le raidisseur 12 et le panneau forment une cavité 18. Cette cavité 18 est débouchante à au moins une des extrémités du raidisseur 12. Selon un mode de réalisation illustré sur les figures 1A à 1D, la cavité est débouchante aux deux extrémités du raidisseur 12. Selon un mode de réalisation, le raidisseur a un profil en Oméga selon une coupe transversale, à savoir une forme en U renversé et évasé avec de part et d'autre un rebord formant les zones de contact avec la surface 14, comme illustré sur la figure 2.

Selon les cas, le panneau 10 peut avoir un profil plan ou courbe.

De préférence, lorsque le panneau 10 n'est pas plan, la partie supérieure 20 du raidisseur n'est pas plane et suit le profil du panneau.

Sur les figures 1A à 1D, le panneau 10 a une forme en creux 22, appelée par la suite forme en contre dépouille, au niveau de la surface 14. A titre d'exemple, cette forme en contre dépouille 22 peut découler d'un lâché de plis, à savoir une réduction du nombre de plis formant le panneau au niveau de certaines zones du panneau.

Selon les cas, le panneau 10 et/ou le raidisseur 12 peuvent avoir des formes en contre dépouille 22.

Selon une première solution, le raidisseur 12 est mis en place sur le panneau 10 et les deux éléments 10 et 12 sont polymérisés lors du même cycle.

Selon une autre solution, le raidisseur 12 est mis en place sur le panneau 10 alors qu'un des deux éléments est déjà au moins partiellement polymérisé.

Dans tous les cas, avant la rigidif ication du dernier élément 10 ou 12 par polymérisation, un noyau 24 est intercalé entre le raidisseur 12 et le panneau 10 dans la cavité 18 afin de garantir la géométrie du raidisseur après polymérisation.

Selon l'invention, le noyau 24 comprend une première partie 26 ayant un faible coefficient de dilatation, inférieur au coefficient de dilatation de la matière du raidisseur, pour assurer la précision géométrique requise et au moins une deuxième partie 28 ayant un coefficient d'allongement important, supérieur ou égal à 600%, pour permettre l'extraction de ladite partie 28.

A titre d'exemple, dans le cas d'un raidisseur en pré-imprégné carbone/époxy le coefficient de dilatation de la première partie 26 est de l'ordre de alpha=3,19 (°K×0,1).

La seconde partie 28 se présente sous forme d'une bande qui s'étend d'une extrémité à l'autre du raidisseur.

En fonction de la géométrie de la cavité, la première partie 26 peut se présenter sous forme d'une bande lorsque le panneau est plan ou avoir une forme adaptée à celle de la surface du panneau dans le cas par exemple d'un lâché de plis.

Les deux parties 26 et 28 peuvent se translater l'une par rapport à l'autre selon la direction longitudinale afin de retirer les deux parties l'une après l'autre.

Selon une caractéristique de l'invention, au niveau d'une section transversale, la surface occupée par la première partie 26 correspond à au moins 75% de la surface de la cavité 18 alors que la seconde partie 28 correspond à moins de 25% de la surface de la cavité 18. Avantageusement, le ratio est de 85% pour la première partie 26 et 15% pour la seconde partie 28.

Ce rapport entre la première partie et la seconde partie permet d'obtenir un bon compromis entre la limitation de la déformation par dilatation du noyau et une contraction suffisante de la seconde partie 28 pour permettre son extraction. Comme illustré sur la figure 1A, dans le cas d'un panneau avec une forme 22 en contre dépouille de profondeur E, la seconde partie 28 doit avoir une épaisseur supérieure à E pour permettre l'extraction du noyau.

Selon un mode de réalisation, la première partie 26 est en mousse afin d'être assez souple pour épouser éventuellement le profil courbe du panneau, tout en assurant la tenue de la forme du raidisseur avant et pendant la polymérisation. La mousse présente l'avantage d'avoir une dilatation faible par rapport à des solutions de noyaux entièrement en silicone ou en élastomère qui provoquent par dilatation une déformation du raidisseur ou du panneau.

La mousse utilisée pour la première partie 26 doit être stable thermiquement et supportée la pression lors de la polymérisation. De préférence, la mousse est de type polyméthacrylimide. Avantageusement, elle a une densité supérieure ou égale à 95 Kg/m³ pour résister à la pression.

A titre d'exemple, la première partie en mousse assure la tenue des formes géométriques du raidisseur lors d'une polymérisation à 7 bars à 180°C pendant 2 heures.

Avantageusement, la mousse utilisée doit avoir une granulométrie fine pour éviter un marquage des pièces en contact (raidisseur ou panneau) qui pénaliserait le démoulage.

La première partie en mousse 26 a une section trapézoïdale sensiblement constante sur toute sa longueur.

De préférence, la première partie 26 en mousse est recouverte de polytétrafluoroéthylène 30 afin d'une part d'éviter que les cellules de la mousse provoquent des empreintes dans le pré-imprégné, et d'autre part, d'éviter l'adhérence de la résine sur la mousse.

Ce revêtement de polytétrafluoroéthylène 30 a une épaisseur de l'ordre de 0,17mm.

Sur les figures 3A et 3B, on a représenté un mode de dépose manuel du revêtement de polytétrafluoroéthylène 30 sur la première partie en mousse 26. On utilise de préférence, un revêtement de polytétrafluoroéthylène adhésif. Dans un premier temps, on applique le revêtement de polytétrafluoroéthylène 30 sur la première partie en mousse reposant sur sa grande base, comme illustré sur la figure 3A.

En suivant, après retournement de la première partie, les rebords du revêtement 30 sont plaqués contre la grande base de la partie en mousse 26. Les rebords du revêtement sont légèrement chevauchants.

Enfin, l'ensemble est compacté afin de limiter les risques de déformations par dilatation. A titre d'exemple, on réalise un compactage de l'ensemble pendant 5 mn avec un vide de 0,85 mbar.

La seconde partie 28 se présente sous la forme d'une bande élastomère de préférence siliconée.

A titre d'exemple, cette bande a une épaisseur de l'ordre de 3,2 mm.

La seconde partie a un coefficient d'allongement suffisant pour permettre le démoulage, pour obtenir une contraction suffisante de la section lors d'une traction longitudinale exercée sur ladite seconde partie.

Pour obtenir un fonctionnement optimal, la seconde partie doit avoir un coefficient d'allongement supérieur ou égal à 600%.

Selon un mode de réalisation, la seconde partie a un coefficient d'allongement de 650%.

Selon une caractéristique de l'invention, lorsque le panneau 10 comprend une forme en contre dépouille 22, la seconde partie 28 est plaquée contre le panneau et épouse la forme du panneau grâce à sa souplesse.

Le noyau 24 comprend au moins une seconde partie 28 plaquée contre le panneau et/ou le raidisseur comportant une forme en contre dépouille. Avantageusement, les deux parties 26 et 28 du noyau s'étendent au-delà du raidisseur à au moins une de ses extrémités afin de pouvoir saisir les deux parties pour les extraire du raidisseur.

A titre d'exemple, à une extrémité du raidisseur, le dépassement de la première partie est de l'ordre de 50 mm et celui de la seconde partie de l'ordre de 100 mm.

Lorsque le raidisseur a une longueur importante, supérieure à 4 m, la première partie 26 peut être réalisée en plusieurs tronçons disposés les uns à la suite des autres. Dans tous les cas, la seconde partie doit être réalisée d'un seul tenant pour éviter les défauts au niveau des jonctions et pour faciliter l'extraction.

Le procédé de mise en place d'un raidisseur sur un panneau est maintenant expliqué au regard des figures 1A à 1D.

Le noyau 24 est mis en place sur le panneau, la seconde partie 28 étant plaquée contre ledit panneau. Le raidisseur est rapporté sur le noyau 24, comme illustré sur la figure 1A.

Après polymérisation, on retire la seconde partie 28 du noyau en exerçant une traction à l'une de ses extrémités, comme illustré sur la figure 1B.

La traction exercée provoque un allongement de ladite seconde partie 28 et une contraction de la section de ladite seconde partie 28, notamment au niveau de la forme en contre dépouille.

Comme illustré sur la figure 1C, la seconde partie 28 étant retirée, la première partie 26 peut être retirée de la cavité en la tirant à partir de l'une de ses extrémités comme illustré sur la figure 1C.

On obtient alors un raidisseur solidarisé à un panneau comme illustré sur la figure 1D.

On note que le noyau permet d'obtenir un raidisseur évidé.

Le noyau selon l'invention permet d'obtenir la précision géométrique requise grâce à la première partie, son retrait étant rendu possible grâce à la seconde partie. De plus, il n'entraîne pas de défauts au niveau de la surface aérodynamique.

Il peut être utilisé lors de la mise en oeuvre d'un raidisseur et d'un panneau non complètement polymérisés (frais), polymérisés lors du même cycle en présence du noyau ou avec au moins un de ces deux éléments polymérisés préalablement à la mise en place du noyau.

Le noyau peut être utilisé pour des panneaux non plans et permet d'obtenir des raidisseurs de grandes longueurs.

Enfin, la mise en oeuvre du noyau est relativement simple et ne nécessite pas d'outillage complexe.

## Revendications

1. Procédé de réalisation d'un raidisseur (12) sur une surface (14) d'un élément à rigidifier (10), au moins l'un des deux étant en un matériau composite non complètement polymérisé, ledit raidisseur (12) comprenant selon une direction transversale deux zones de contact (16.1, 16.2) avec la surface (14) entre lesquelles le raidisseur (12) et l'élément à rigidifier (10) forment une cavité (18) débouchante à au moins une des extrémités du raidisseur (12), consistant à utiliser un noyau (24) placé dans la cavité (18) et retiré de ladite cavité après polymérisation, **caractérisé en ce qu'**il consiste à utiliser un noyau (24) avec une première partie (26) ayant un coefficient de dilatation inférieur à celui du matériau du raidisseur pour assurer la précision géométrique requise et au moins une deuxième partie (28) ayant un coefficient d'allongement supérieur ou égal à 600% pour permettre l'extraction de ladite partie par traction à une des extrémités de ladite seconde partie de manière à provoquer une contraction de sa section.

2. Procédé de réalisation d'un raidisseur (12) sur une surface (14) d'un élément à rigidifier (10) selon la revendication 1, **caractérisé en ce qu'**au niveau d'une section transversale, la surface occupée par la première partie (26) correspond à au moins 75% de la surface de la cavité (18) alors que la seconde partie (28) correspond à moins de 25% de la surface de la cavité (18).

3. Procédé de réalisation d'un raidisseur (12) sur une surface (14) d'un élément à rigidifier (10) selon la revendication 1 ou 2, **caractérisé en ce que**, dans le cas d'un élément à rigidifier avec une forme (22) en contre dépouille de profondeur E, la seconde partie (28) a une épaisseur supérieure à E.

4. Procédé de réalisation d'un raidisseur (12) sur une surface (14) d'un élément à rigidifier (10) selon l'une quelconque des revendications 1 à 3, **caractérisé en ce que** la première partie (26) est en mousse.

5. Procédé de réalisation d'un raidisseur (12) sur une surface (14) d'un élément à rigidifier (10) selon la revendication 4, **caractérisé en ce que** la mousse est de type polyméthacrylimide.

6. Procédé de réalisation d'un raidisseur (12) sur une surface (14) d'un élément à rigidifier (10) selon la revendication 4 ou 5, **caractérisé en ce que** la mousse a une densité supérieure ou égale à 95 Kg/m³.

7. Procédé de réalisation d'un raidisseur (12) sur une surface (14) d'un élément à rigidifier (10) selon l'une quelconque des revendications 4 à 6, **caractérisé en ce que** la première partie (26) est recouverte de polytétrafluoroéthylène.

8. Procédé de réalisation d'un raidisseur (12) sur une surface (14) d'un élément à rigidifier (10) selon l'une quelconque des revendications 1 à 7, **caractérisé en ce que** la seconde partie (28) est en élastomère.

## Patentansprüche

1. Verfahren zur Herstellung eines Versteifungsmittels (12) auf einer Oberfläche (14) eines zu versteifenden Elements (10), wobei wenigstens eines der beiden aus einem nicht vollständig polymerisierten Verbundmaterial ist und wobei das Versteifungsmittel (12) in eine Querrichtung zwei Kontaktbereiche (16.1, 16.2) mit der Oberfläche (14) aufweist, zwischen denen das Versteifungsmittel (12) und das zu versteifende Element (10) einen Hohlraum (18) bilden, der sich an wenigstens einem Ende des Versteifungsmittels (12) öffnet, wobei das Verfahren darin besteht, einen Kern (24) zu verwenden, der in dem Hohlraum (18) angeordnet wird und der aus dem besagten Hohlraum nach der Polymerisierung entfernt wird, **dadurch gekennzeichnet, dass** dieses darin besteht, einen Kern (24) mit einem ersten Abschnitt (26) zu verwenden, der einen kleineren Ausdehnungskoeffizienten als das Material des Versteifungsmittels aufweist, um die erforderliche geometrische Genauigkeit zu gewährleisten, und mit wenigstens einem zweiten Abschnitt (28), der einen Dehnungskoeffizienten größer oder gleich 600% aufweist, um das Entfernen des besagten Abschnitts zu gewährleisten, indem an einem der Enden des besagten zweiten Abschnitts derart gezogen wird, dass ein Zusammenziehen seines Querschnitts hervorgerufen wird.

2. Verfahren zur Herstellung eines Versteifungsmittels (12) auf einer Oberfläche (14) eines zu versteifenden Elements (10) nach Anspruch 1, **dadurch gekennzeichnet, dass** bezogen auf einen Querschnitt die vom ersten Abschnitt (26) eingenommene Oberfläche wenigstens 75% der Fläche des Hohlraums (18) entspricht, während der zweite Abschnitt (28) weniger 25% der Fläche des Hohlraums (18) entspricht.

3. Verfahren zur Herstellung eines Versteifungsmittels (12) auf einer Oberfläche (14) eines zu versteifenden Elements (10) nach Anspruch 1 oder 2, **dadurch gekennzeichnet, dass** im Fall eines zu versteifenden Elements mit einer Form (22) mit Hinterschneidungen der Tiefe E der zweite Abschnitt (28) eine Dicke größer E hat.

4. Verfahren zur Herstellung eines Versteifungsmittels (12) auf einer Oberfläche (14) eines zu versteifenden Elements (10) nach einem der Ansprüche 1 bis 3, **dadurch gekennzeichnet, dass** der erste Abschnitt (26) aus Schaumstoff ist.

5. Verfahren zur Herstellung eines Versteifungsmittels (12) auf einer Oberfläche (14) eines zu versteifenden Elements (10) nach Anspruch 4, **dadurch gekennzeichnet, dass** der Schaumstoff vom Typ Polymethacrylimid ist.

6. Verfahren zur Herstellung eines Versteifungsmittels (12) auf einer Oberfläche (14) eines zu versteifenden Elements (10) nach Anspruch 4 oder 5, **dadurch gekennzeichnet, dass** der Schaumstoff eine Dichte größer oder gleich 95 kg/m³ hat.

7. Verfahren zur Herstellung eines Versteifungsmittels (12) auf einer Oberfläche (14) eines zu versteifenden Elements (10) nach einem der Ansprüche 4 bis 6, **dadurch gekennzeichnet, dass** der erste Abschnitt (26) mit Polytetrafluorethylen beschichtet ist.

8. Verfahren zur Herstellung eines Versteifungsmittels (12) auf einer Oberfläche (14) eines zu versteifenden Elements (10) nach einem der Ansprüche 1 bis 7, **dadurch gekennzeichnet, dass** der zweite Abschnitt (28) aus einem Elastomer ist.

## Claims

1. Method for the production of a stiffener (12) on a surface (14) of an element (10) that is to be made rigid, at least one of the two being made of a composite material that is not completely polymerized, said stiffener (12) comprising - in a transverse direction - two contact zones (16.1, 16.2) with the surface (14) between which the stiffener (12) and the element (10) to be made rigid form a cavity (18) that empties out at at least one of the ends of said stiffener (12), consisting in using a core (24) placed in the cavity (18) and removed from said cavity after polymerization, **characterized in that** it consists in using a core (24) with a first part (26) that has a low expansion coefficient less than that of the material of the stiffener to ensure the geometric precision required and at least one second part (28) that has an elongation coefficient greater than or equal to 600 % to make possible the extraction of said part by traction on one of the ends of said second part so as to cause a contraction of its cross-section.

2. Method for the production of a stiffener (12) on a surface (14) of an element (10) that is to be made rigid according to Claim 1, wherein at a transverse cross-section, the surface occupied by the first part (26) corresponds to at least 75% of the surface of the cavity (18), whereas the second part (28) corresponds to less than 25% of the surface of the cavity (18).

3. Method for the production of a stiffener (12) on a surface (14) of an element (10) that is to be made rigid according to Claim 1 or 2, wherein in the case of an element that is to be made rigid with an undercut shape (22) of depth E, the second part (28) has a thickness of greater than E.

4. Method for the production of a stiffener (12) on a surface (14) of an element (10) that is to be made rigid according to any of Claims 1 to 3, wherein the first part (26) is made of foam.

5. Method for the production of a stiffener (12) on a surface (14) of an element (10) that is to be made rigid according to Claim 4, wherein the foam is of the polymethacrylimide type.

6. Method for the production of a stiffener (12) on a surface (14) of an element (10) that is to be made rigid according to Claim 4 or 5, wherein the foam has a density that is greater than or equal to 95 Kg/m³.

7. Method for the production of a stiffener (12) on a surface (14) of an element (10) that is to be made rigid according to any of Claims 4 to 6, wherein the first part (26) is covered by polytetrafluoroethylene.

8. Method for the production of a stiffener (12) on a surface (14) of an element (10) that is to be made rigid according to any of Claims 1 to 7, wherein the second part (28) is made of elastomer.
